# EUROPÄISCHE PATENTSCHRIFT

(11) **EP 2 620 197 B1**
(45) Veröffentlichungstag und Bekanntmachung des Hinweises auf die Patenterteilung: **09.09.2015**
(21) Anmeldenummer: 13152513.1
(22) Anmeldetag: 24.01.2013
(51) Int. Cl.: A63H 18/10, A63H 30/04, G06F 17/00

(54) **System zum Betrieb von Modellfahrzeugen und Modellfahrzeug dafür**
System for operating of model vehicles and model vehicle for this
Système destiné au fonctionnement de maquettes de véhicules et maquette de véhicule à cet effet

(30) Priorität: 27.01.2012 DE 202012000819 U
(43) Veröffentlichungstag der Anmeldung: 31.07.2013
(73) Patentinhaber: Gebr. Faller GmbH Fabrik für Qualitätsspielwaren, 78148 Gütenbach (DE)
(72) Erfinder: Bernauer, Clemens, 79256 Buchenbach (DE)
(74) Vertreter: Westphal, Mussgnug & Partner Patentanwälte mbB

(56) Entgegenhaltungen:
- CN-Y- 2 604 128
- DE-U1-202004 018 425
- US-A1- 2003 148 698
- US-A1- 2010 279 582

## Beschreibung

Die vorliegende Erfindung betrifft ein System zum Betrieb von Modellfahrzeugen gemäß dem Oberbegriff des Patentanspruchs 1 sowie ein Modellfahrzeug für ein solches System gemäß dem Oberbegriff des Patentanspruchs 11.

Aus dem Stand der Technik sind verschiedene Systeme zum Betrieb von Modellfahrzeugen, beispielsweise von der Anmelderin unter der Bezeichnung "Faller Car System" bekannt.

Derartige Systeme zum Betrieb von Modellfahrzeugen weisen wenigstens ein Modellfahrzeug mit energieautarkem Antrieb und einer Lenkachse, die mit Hilfe eines Magneten einem unmittelbar unter einer Fahrbahn verlegten Fahrdraht folgt, sowie ein Steuergerät zur Steuerung von weichenähnlich ausgebildeten Vorrichtungen in dem Fahrweg auf. In Kreuzungs- und/oder Abbiegesituationen ist es bei derartigen Systemen notwendig, dass durch eine ortsfest montierte Beeinflussungseinrichtung das Fahrzeug dem vorgesehenen Fahrweg zugeordnet wird, sodass entsprechend dem für das jeweilige Fahrzeug vorgesehenen Fahrweg beispielsweise ein Abbiegevorgang eingeleitet wird. Durch das Vorsehen eines Magnetfeldsensors in dem Modellfahrzeug und entsprechender Spulen zur Erzeugung von senkrecht zu dem Fahrweg ausgerichteten und nördlich beziehungsweise südlich orientierten Magnetfeldern ist es außerdem möglich, eine zusätzliche Information an die Fahrzeuge zu übertragen, die beispielsweise eine zweite Fahrstufe, das heißt einen Schnell- oder Langsamfahrbetrieb abruft.

Bei der Detektion eines entsprechend ausgerichteten Magnetfelds erfolgt dann eine Umschaltung zwischen den beiden Fahrstufen. An dieser Ausgestaltung wird es als nachteilig empfunden, dass lediglich zwei Fahrstufen abrufbar sind und daher für viele Anwendungssituationen ein wenig naturgetreues Fahrverhalten der Modellfahrzeuge erzeugt wird.

Ein gegenpolig ausgerichtetes Magnetfeld, beispielsweise in Nord-Richtung, kann zusätzlich eine weitere Funktion, beispielsweise eine Stoppstelle für die Fahrzeuge realisieren, indem eine Spannungsversorgung des Modellfahrzeuges unterbrochen wird.

Wie die Umschaltung zwischen den Fahrstufen erfolgt auch das Anhalten durch Unterbrechen der Spannungsversorgung für das Fahrzeug beziehungsweise eines Antriebs des Fahrzeugs sehr abrupt, sodass auch hier keine naturgetreue Wiedergabe eines Abbremsvorgangs erreicht wird.

Ein weiterer Nachteil des bislang bekannten Systems ist, dass eine Abstandssteuerung zur Entzerrung des Verkehrs und zur Vermeidung von Auffahrunfällen nur relativ aufwändig realisiert werden kann. Bislang wird durch den Lenkmagnet eines vorausfahrenden Fahrzeugs über einen Magnetfeldsensor, beispielsweise einen Reedkontakt, eine Stoppstelle im Bereich der Fahrbahn für eine vorgebbare Zeit aktiviert, sodass ein nachfolgendes Fahrzeug für den vorgegebenen Zeitraum an dieser Stoppstelle anhält. Mit dem gleichen System können auch rechts vor links Regelungen, Zebrastreifen oder Einmündungen von Nebenstraßen in Hauptstraßen nachgebildet werden. Nachteilig hierbei ist jedoch, dass zur Realisierung der vorgenannten Effekte ein erheblicher Verkabelungsaufwand sowie ein erheblicher Aufwand an Hardware für Sensorik und Stoppstellen notwendig ist.

Als weiterer Stand der Technik wird die DE 20 2004 018425 U1 zitiert.

Es ist die Aufgabe der vorliegenden Erfindung, die aus dem Stand der Technik bekannten Probleme zu beseitigen und ein System zum Betrieb von Modellfahrzeugen sowie Modellfahrzeuge hierfür mit verbesserter Funktionalität zur Verfügung zu stellen.

Diese Aufgabe wird durch ein System zum Betrieb von Modellfahrzeugen gemäß Patentanspruch 1 sowie durch Modellfahrzeuge gemäß Patentanspruch 11 gelöst.

Ein erfindungsgemäßes System zum Betrieb von Modellfahrzeugen weist wenigstens ein Modellfahrzeug mit energieautarkem Antrieb und einer Lenkachse, die mit Hilfe eines Magneten, im gebrauch, einem unmittelbar unter einer Fahrbahn verlegten Fahrdraht folgt und ein Steuergerät auf, wobei ein Ortungssystem für die Modellfahrzeuge und ein drahtloses Kommunikationssystem zur Übermittlung von Informationen an das Fahrzeug und/oder von dem Fahrzeug vorgesehen sind, wobei das Ortungssystem zur Feststellung der Position der einzelnen Fahrzeuge wenigstens einen Signalsender und eine Mehrzahl von Signalempfängern aufweist, wobei der Signalsender jeweils einem Modellfahrzeug zugeordnet ist und eine Position des jeweiligen Fahrzeugs durch Auswertung der Laufzeitdifferenzen eines von dem Signalsender ausgesendeten Signals an den Signalempfängern erfolgt.

Durch das Vorsehen eines Ortungssystems für die Modellfahrzeuge wird eine millimetergenaue Ortung der Modellfahrzeuge auf einem vorgesehenen Fahrbahnnetz möglich. Durch das drahtlose Kommunikationssystem wird eine Übermittlung von Informationen in das Fahrzeug ermöglicht, sodass auf Grund der übermittelten Informationen in Zusammenwirkung mit der aus dem Ortungssystem ermittelten Position ortsbezogene Aktionen, wie beispielsweise Blinker, Hupe oder Anpassung der Fahrgeschwindigkeit möglich werden. Durch Vergleich der Positionsinformationen mehrerer Modellfahrzeuge wird es außerdem möglich, Vorfahrtsregelungen, wie beispielsweise rechts vor links, Nebenstraße-Hauptstraße oder fahrzeugspezifische Vorfahrtsregelungen (Feuerwehr hat immer Vorfahr) zu realisieren. Durch die Positionsinformationen wird es außerdem möglich, eine fahrzeugbezogene Abstandsteuerung zu realisieren, sodass nachfolgende Fahrzeuge entgegen der oben beschriebenen, aus dem Stand der Technik bekannten, Abstandsregelung nicht durch einen zeitgesteuerten Stillstand ihren Abstand zum vorherfahrenden Modellfahrzeug anpassen, sondern sich dem vorherfahrenden Fahrzeug annähern und durch eine Anpassung der Fahrstufe diesem in Kolonne nachfolgen.

Ein solches Ortungssystem ist besonders einfach ultraschallbasiert zu realisieren. Ausgestaltungen, die laserbasiert oder radarbasiert sind, sind möglich, aber technisch aufwändiger.

In diesem Fall ist den Modellfahrzeugen jeweils ein Ultraschallsender zugeordnet, der beispielsweise periodisch oder getriggert durch eine Steuereinrichtung ein Ultraschallsignal aussendet, das dann von bevorzugt drei Signalempfängern, beispielsweise Ultraschallempfängern, aufgenommen und mit Hilfe einer Auswertelektronik zu einer Position des Modellfahrzeugs umgerechnet wird. Das Kommunikationssystem ist bevorzugt funkbasiert ausgebildet, kann aber auch beispielsweise infrarot oder ultraschallbasiert ausgebildet sein. Eine funkbasierte Variante des Kommunikationssystems hat jedoch den Vorteil, dass ein Übersprechen des Ortungssystems vermieden kann. Auch gegenüber infrarotbasierten Kommunikationssystemen ist eine funkbasierte Variante im Vorteil, da infrarotbasierte Systeme durch intensive Sonneneinstrahlung oder andere Lichteinflüsse funktionsunfähig werden können.

Das Kommunikationssystem weist wenigstens eine ortsfeste Komponente und wenigstens eine mobile Komponente auf, wobei die ortsfeste Komponente mit dem Steuergerät verbunden und die mobile Komponente dem Modellfahrzeug zugeordnet ist. Bei größeren Modellanlagen kann es auch sinnvoll sein, mehrere ortsfeste Komponenten über die Anlage zu verteilen, sodass an allen möglichen Positionen der Modellanlage eine Verbindung sichergestellt ist.

Um sowohl Informationen an das Modellfahrzeug senden als auch Informationen von dem Modellfahrzeug empfangen zu können, ist es sinnvoll, wenn das Kommunikationssystem bidirektional ausgebildet ist. Bei einer bidirektionalen Ausbildung des Kommunikationssystems sind also sowohl die ortsfesten Komponenten als auch die mobilen Komponenten jeweils als Sender und Empfänger ausgebildet.

Um die Anzahl der notwendigen Komponenten zu reduzieren und um eine möglichst gute Systemintegration zu erreichen ist es sinnvoll, wenn das Steuergeräte mit dem Ortungssystem verbunden und geeignet ausgebildet ist, Informationen über ein Fahrbahnnetz und Informationen aus dem Ortungssystem miteinander zu verknüpfen und das Modellfahrzeug basierend auf diesen Informationen über das Kommunikationssystem anzusteuern. Auf diese Weise wird erreicht, dass beispielsweise Stoppstellen, Ampelanlagen oder lokale Geschwindigkeitsbegrenzungen, welche alle als Informationen über das Fahrbahnnetz hinterlegt sein können, von den Modellfahrzeugen umgesetzt werden.

In einer bevorzugten Weiterbildung ist das Steuergerät geeignet ausgebildet, die Steuerung eines Modellfahrzeuges basierend auf Informationen über andere Modellfahrzeuge durchzuführen. Auf diese Weise kann eine Abstandsregelung zwischen einander folgenden Fahrzeugen, eine rechts vor links Regelung oder eine Vorfahrtsregelung für Feuerwehren oder andere Einsatzfahrzeuge mit Sondersignal realisiert werden.

Idealerweise ist das Steuergerät geeignet ausgelegt, eine Vielzahl von Modellfahrzeugen anzusteuern, das heißt, dass wenigstens 10 bevorzugt aber wenigstens 40 Modellfahrzeuge mit einem Steuergerät kontrolliert werden können.

Das Steuergerät sowie die entsprechenden Komponenten in dem Modellfahrzeug sind bevorzugt derart ausgebildet, dass eine Ansteuerung einer Vielzahl von Fahrstufen, bevorzugt mehr als 10 Fahrstufen über das Kommunikationssystem möglich ist. Auf diese Weise kann ein realistisches Beschleunigungs- und Abbremsverhalten der Fahrzeuge sowie eine situationsadäquate Anpassung der Fahrstufe, beispielsweise ein Langsamfahren bei Bergaufstrecken, erreicht werden.

Ein Modellfahrzeug für ein solches System weist einen energieautarken Antrieb sowie eine Steuereinrichtung auf, wobei ein Signalsender und wenigstens ein Kommunikationsempfänger, der mit der Steuereinrichtung verbunden ist, vorgesehen sind. Über den Kommunikationsempfänger kann das Modellfahrzeug Steuersignale von einem Steuergerät beziehungsweise einem mit dem Steuergerät verbundenen Sender empfangen und an die Steuereinrichtung zur Weiterverarbeitung übergeben. Die Steuereinrichtung kann dann beispielsweise eine Fahrstufe des Antriebs oder andere fahrzeugbezogene Aktionen auslösen.

Wenn zusätzlich ein Kommunikationssender vorgesehen ist, ist es außerdem möglich, dass die Steuereinrichtung ihrerseits an den Kommunikationssender Informationen, beispielsweise über den Ladezustand von dem in dem Modellfahrzeug verbauten Energiespeicher, beispielsweise Lithium- Polymerakkumulatoren, oder über die aktuelle Fahrstufe des Fahrzeuges übergibt, sodass diese über den Kommunikationssender an das Steuergerät übermittelt werden.

Vorzugsweise ist auch der Signalsender mit der Steuereinrichtung verbunden. Auf diese Weise kann erreicht werden, dass ein Signal zur Ortung des Modellfahrzeuges nicht nur in periodischen Abständen sondern auch auf Anforderung abgegeben wird. So kann beispielsweise orts- oder geschwindigkeitsabhängig eine erhöhte Frequenz zur Abgabe eines Ortungssignals vorgesehen sein.

In einer bevorzugten Ausgestaltung des Modellfahrzeugs ist die Steuereinrichtung geeignet ausgebildet, den Antrieb in einer Mehrzahl von Geschwindigkeitsstufen nach Maßgabe von über den Kommunikationsempfänger empfangenen Informationen bzw. Befehlen anzusteuern. Durch eine derartige Ausgestaltung kann beispielsweise eine ortsabhängige Geschwindigkeitsbegrenzung, eine Abstandsregelung oder ein langsames Annähern an eine Kreuzung erreicht werden.

In einer weiter bevorzugten Ausgestaltung des erfindungsgemäßen Modellfahrzeugs ist die Steuereinrichtung geeignet ausgebildet, eine Mehrzahl von Lichterzeugern und/oder Geräuscherzeugern nach Maßgabe von über den Kommunikationsempfänger empfangenen Informationen anzusteuern. Auch durch diese Maßnahme kann erreicht werden, dass beispielsweise ein Feuerwehrfahrzeug nur im Bereich von Kreuzungen und nur auf dem Weg zu einem Einsatzort mit Sondersignal, das heißt Rundumleuchte und Martinshorn, fährt, wohingegen die Rückfahrt ohne diese zusätzlichen Signale erfolgt. Die gleiche Funktion kann außerdem dazu genutzt werden, dass abbiegende Fahrzeuge im Bereich von Kreuzungen beziehungsweise Abzweigungen blinken und/oder einer Fahrstufe angepasste Motorengeräusche erzeugt werden.

Wie bereits angedeutet, ist es vorteilhaft, wenn die Steuereinrichtung geeignet ausgebildet ist, Informationen über eine aktuellen Zustand des Modellfahrzeuges an den Kommunikationssender zu übermitteln, das heißt an ein Steuergerät eine Rückmeldung zu geben, in welchem Zustand, beispielsweise Ladezustand der Batterien oder in welcher Fahrstufe, sich das jeweilige Modellfahrzeug momentan befindet.

Vorstellbar wäre beispielsweise als weitere Zusatzfunktionen das Vorsehen eines Lagesensors mit dem dann eine "Unfallmeldung" bei einem Umkippen eines Fahrzeugs ausgegeben werden könnte.

In einer Weiterbildung des vorgeschlagenen Systems sowie der vorgeschlagenen Modellfahrzeuge kann außerdem bei Vorsehen eines Lenkantriebs ein völlig autarkes Fahren der Modellfahrzeuge erreicht werden. Auf Grund der hierfür notwendigen großen Rechnerleistung sowie des erheblichen Regelungsaufwands innerhalb der Fahrzeuge scheint eine Umsetzung des Systems mit autark fahrenden Modellfahrzeugen jedoch derzeit nicht sinnvoll zu sein.

Die vorliegende Erfindung wird nachfolgend anhand eines Ausführungsbeispiels unter Bezugnahme auf die beigefügten Figuren eingehend erläutert.

Es zeigen:
- Figur 1: Eine Prinzipskizze des erfindungsgemäßen Systems und
- Figur 2: Ein Blockschaltbild der in dem Modellfahrzeug verbauten Komponenten.

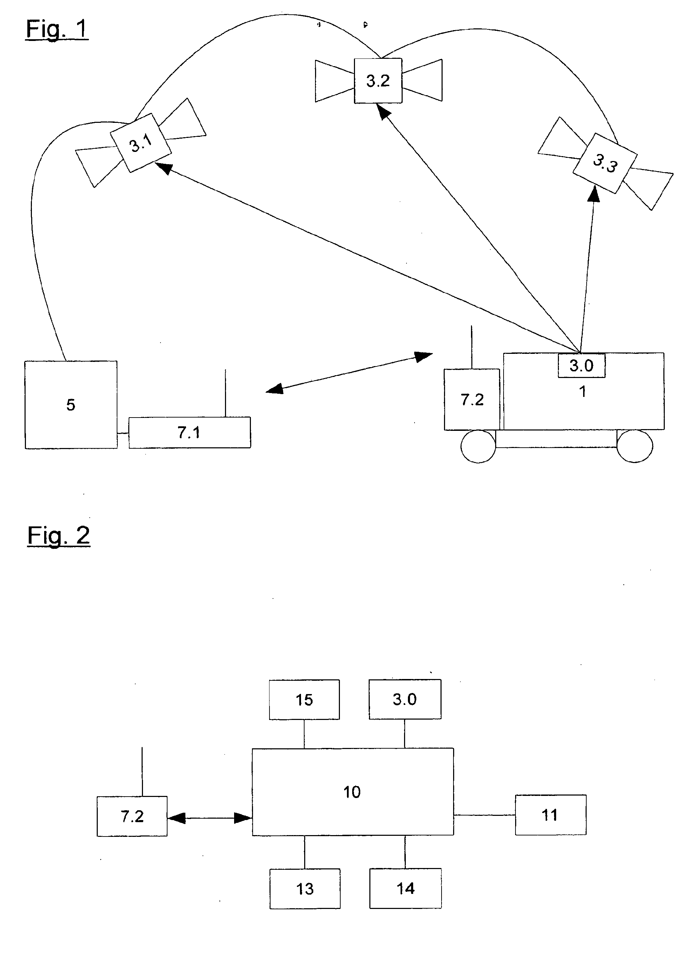

Figur 1 zeigt eine schematische Darstellung eines Systems zum Betrieb von Modellfahrzeugen 1 mit einem Ortungssystem 3 sowie einem drahtlosen Kommunikationssystem 7. In dem in Figur 1 dargestellten schematischen Aufbau des Systems ist lediglich ein Modellfahrzeug 1 dargestellt, wobei aus Gründen der Übersichtlichkeit auf eine Darstellung der Fahrbahn verzichtet wurde.

Modellfahrzeuge 1 mit energieautarkem Antrieb und einer Lenkachse, die mit Hilfe eines Magneten einem unmittelbar unter einer Fahrbahn verlegtem Fahrdraht folgen sowie eine entsprechend ausgestaltete Fahrbahn sind hinreichend bekannt und bedürfen daher keiner näheren Beschreibung.

Das Modellfahrzeug 1 weist einerseits einen Signalsender 3.0 auf, der im vorliegenden Ausführungsbeispiel als Ultraschallsender ausgestaltet ist. Von dem Ultraschallsender 3.0 ausgesendete Schallwellen werden von Signalempfängern 3.1, 3.2, 3.3, die im vorliegenden Ausführungsbeispiel als Ultraschallempfänger ausgestaltet und beispielsweise an einer Decke oberhalb der Fahrbahn der Modellfahrzeuge 1 angeordnet sind, empfangen. Auf Basis von Laufzeitdifferenz, die das empfangene Signal zu an den einzelnen Signalempfängern 3.1, 3.2, 3.3 aufweist, kann ein Steuergerät 5 oder eine separat dem Ortungssystem 3 zugeordnete Auswerteeinheit eine Position des Modellfahrzeugs 1 berechnen.

Das Ortungssystem 3 ist mit dem Steuergerät 5 verbunden, das die durch das Ortungssystem 3 ermittelten Positionsinformationen mit Informationen über ein Fahrbahnnetz verknüpft. Solche Informationen über das Fahrbahnnetz können neben einem Netzplan beispielsweise Informationen über Vorfahrtsregelungen sowie andere vorgegebene Verkehrsregeln, beispielsweise abschnittsweise vorgegebene Geschwindigkeiten, umfassen.

Das Steuergerät 5 ist zusätzlich mit einer ortsfesten Komponente 7.1 eines Kommunikationssystems 7 verbunden. Das Kommunikationssystem 7 weist außerdem eine mobile Komponente 7.2 auf, die dem Modellfahrzeug 1 zugeordnet ist. In einer einfachen Ausgestaltung des Kommunikationssystems 7 ist dieses unidirektional ausgebildet, das heißt, dass lediglich von der ortsfesten Komponente 7.1, die dann als Sender ausgebildet ist, Informationen zu der mobilen Komponente 7.2, die dann als Empfänger ausgebildet ist, übertragen werden.

Wie in Figur 1 angedeutet, ist es aber bevorzugt, wenn das Kommunikationssystem 7 bidirektional ausgebildet ist. Bei einer bidirektionalen Ausbildung des Kommunikationssystems 7 sind sowohl die ortsfeste Komponente 7.1 als auch die mobile Komponente 7.2 jeweils als Sender und Empfänger ausgebildet. Auf diese Weise ist es möglich, dass sowohl Informationen an das Modellfahrzeug 1 als auch von dem Modellfahrzeug 1 übertragen werden können.

Eine bidirektionale Verbindung zwischen dem Steuergerät 5 und dem Modellfahrzeug 1 hat außerdem den Vorteil, dass beispielsweise Informationen über einen Ladezustand einer in dem Modellfahrzeug 1 verbauten Energieversorgung, eine Rückmeldung der eingestellten Fahrstufe sowie gegebenenfalls auch eine Lageinformation des Modellfahrzeugs 1 übermittelt werden können. Auf diese Weise kann überprüft werden, ob beispielsweise ein Befehl zur Änderung der Fahrstufe im Modellfahrzeug 1 angekommen ist oder ob das jeweilige Modellfahrzeug 1 auf Grund einer veränderten Lageinformation beispielsweise einen Unfall hatte.

Auf Grund der Positionsinformationen können unter Verknüpfung mit Informationen über das Fahrbahnnetz von dem Steuergerät 5 beispielsweise ortsbezogene Steuerbefehle an das Modellfahrzeug 1 übermittelt werden. Solche ortsbezogenen Steuerbefehle können beispielsweise eine Aktivierung von Lichtsignalen, beispielsweise das Setzen eines Blinkers vor einem Abbiegevorgang, oder Steuerbefehle betreffend die Fahrstufe des Modellfahrzeugs 1 betreffen. Durch eine Funkübertragung zwischen dem Steuergerät 5 und dem Modellfahrzeug 1 ist es möglich, eine Vielzahl von Fahrstufen, die über eine in dem Modellfahrzeug 1 angeordnete Steuereinrichtung 10 abrufbar sind, einzustellen. Auf diese Weise ist es möglich, bei Verknüpfung der Positionsinformationen mehrerer Modellfahrzeuge 1 zusätzlich zur Implementierung von Vorfahrtsregeln auch eine Abstandsregelung zwischen einander folgenden Modellfahrzeugen 1 vorzunehmen. In diesem Fall kann die Fahrstufe eines nachfolgenden Modellfahrzeugs 1, das mit einer höheren Geschwindigkeit auf ein vorausfahrendes Modellfahrzeug 1 aufläuft, durch Abgleich der Positionsinformationen einer daraus ermittelten tatsächlichen Geschwindigkeit der Modellfahrzeuge 1 und Anpassung der Fahrstufe des nachfolgenden Modellfahrzeugs 1 in realistischer Weise angepasst werden.

Durch einen Abruf verschiedener aufeinander folgender Fahrstufen kann außerdem ein realitätsnahes Beschleunigungs- und Abbremsverhalten der Modellfahrzeuge 1 dargestellt werden. Zu diesem Zweck kann beispielsweise vor Kreuzungen eine Überwachung der Positionsinformationen mit erhöhter Frequenz stattfinden, worauf dann dynamisch von dem Steuergerät 5 Befehle zur Erhöhung beziehungsweise Erniedrigung der jeweiligen Fahrstufe des Modellfahrzeugs 1 übermittelt werden. Grundsätzlich ist es aber einfacher, wenn in der Steuereinrichtung 10 Übergangskennlinien für Übergänge zwischen den abrufbaren Fahrstufen hinterlegt sind. Auf diese Weise kann ein naturgetreues Beschleunigungs- und Abbremsverhalten der Modellfahrzeuge 1 besonders einfach dargestellt werden.

Ein weiterer interessanter Anwendungsfall ergibt sich für Modellfahrzeuge 1 mit Sondersignalen, beispielsweise Martinshorn und/oder Rundumleuchten. Durch das Kommunikationssystem 7 wird für solche Modellfahrzeuge 1 ermöglicht, dass diese in realistischer Art und Weise Einsatzsituationen nachempfinden. So kann beispielsweise ein Feuerwehrfahrzeug unter vollem Sondersignal, das heißt mit aktivierter Rundumleuchte und aktiviertem Martinshorn zu einem Einsatzort hinfahren, am Einsatzort das Martinshorn deaktivieren und nach Abschluss des jeweiligen Einsatzes ohne Sondersignal zu seinem Stützpunk zurückkehren. Eine ähnliche Regelung kann sich beispielsweise für die gefahrenen Geschwindigkeiten ergeben, wobei das Fahrzeug dann mit erhöhter Geschwindigkeit zum Einsatzort hin und mit normaler Geschwindigkeit vom Einsatz zum Stützpunkt zurückfahren könnte.

Figur 2 zeigt ein Blockschaltbild der in dem Modellfahrzeug 1 verbauten Komponenten.

Zentraler Bestandteil der in dem Modellfahrzeug 1 verbauten Komponenten ist die Steuereinrichtung 10, die mit einem Antrieb 11, dem Signalsender 3.0, einem oder mehreren Lichterzeugern 13 sowie einem Geräuscherzeuger 14 verbunden ist. Die Steuereinrichtung 10 steht in einer bidirektionalen Verbindung mit der mobilen Komponente 7.2 des Kommunikationssystems 7, sodass von dem Steuergerät 5 über die ortsfeste Komponente 7.1 des Kommunikationssystems 7 übermittelte Steuerbefehle an die Steuereinrichtung 10 übergeben und Informationen über die einzelnen mit der Steuereinrichtung 10 verbundenen anderen Komponenten 3.0, 11, 13, 14, 15 an das Steuergerät 5 übermittelt werden können. Der Signalsender 3.0 kann zur Ortung des Modellfahrzeugs 1 entweder als autarkes System in periodischen Abständen Ortungssignale, das heißt im vorliegenden Beispiel Ultraschallsignale, aussenden oder ein Senden dieser Ortungssignale getriggert durch die Steuereinrichtung 10 vornehmen. Die Steuereinrichtung 10 kann beispielsweise als Mikrocontroller ausgebildet sein. Im Bereich der Zug-, Signal- und Weichenstellung von Modelleisenbahnen sind solche Mikrocontroller weit verbreitet und daher gut erprobt. Die bekanntesten Mikrocontroller arbeiten nach dem DCC-Protokoll (DCC = Digital Command Control), dem Motorola-Protokoll oder dem Selectrix-Protokoll.

Es sind aber auch andere, speziell an die Bedürfnisse von Modellfahrzeugen mit energieautarkem Antrieb angepasste Protokolle und Mikrocontroller denkbar.

Als Lichterzeuger 13 können verschiedene LED-Module, beispielsweise zur Implementierung von Blinkern, Bremsleuchten, Fahrtlicht und Sondersignalen vorgesehen sein.

Der Geräuscherzeuger 14 kann beispielsweise geeignet ausgebildet sein um Sondersignale von Einsatzfahrzeugen zu erzeugen, kann aber auch für sämtliche Fahrzeuge beispielsweise zur Implementierung eines Hup-Geräusches oder von Motorengeräuschen, die dann an die verschienen Fahrstufen des Antriebs 11 sowie die Art des Fahrzeuges angepasst sein können, ausgebildet sein.

Das vorstehend beschriebene System ermöglicht neben einer manuellen Ansteuerung sämtlicher Funktionen der Modellfahrzeuge 1 auch eine Programmierung von Automatikprogrammen für die einzelnen Modellfahrzeuge 1, sodass unter Berücksichtigung der für das Straßennetz hinterlegten Verkehrsregeln eine Interaktion der einzelnen Modellfahrzeuge 1 ermöglicht wird.

Ein besonderer Vorteil des hier beschriebenen Systems liegt in dem deutlich verringerten Verdrahtungsaufwand, der durch Einsatz des Kommunikationssystems 7 sowie des Ortungssystems 3 erreicht wird. Die Verkabelung für eine Vielzahl von Positionsrückmeldern und beispielsweise Stoppstellen kann damit entfallen.

Eine besonders elegante Umsetzung sämtlicher Anforderungen sowie eine benutzerfreundliche Darstellung kann durch eine speziell abgestimmte Software erreicht werden. Ein solches Programm, das die einzelnen Komponenten über die USB-Schnittstelle oder eine andere geeignete Schnittstelle eines PCs ansteuert, kann sowohl die Verarbeitung der erlangten Informationen als auch die Steuerung und Visualisierung des Systems realisieren. Insbesondere können auf diese Weise komplexere Automatikprogramme entworfen und hinterlegt werden.

### Bezugszeichenliste

- 1: Modellfahrzeug
- 3: Ortungssystem
- 5: Steuergerät
- 7: Kommunikationssystem

- 10: Steuereinrichtung
- 11: Antrieb
- 12: Lichterzeuger
- 13: Geräuscherzeuger
- 14: Energieversorgung

- 3.0: Signalsender
- 3.1: Signalempfänger
- 3.2: Signalempfänger
- 3.3: Signalempfänger

- 7.1: ortsfeste Komponente
- 7.2: mobile Komponente

## Patentansprüche

1. System zum Betrieb von Modellfahrzeugen mit
- wenigstens einem Modellfahrzeug (1) mit energieautarkem Antrieb (11) und einer Lenkachse, die mit Hilfe eines Magneten, im gebrauch, einem unmittelbar unter einer Fahrbahn verlegten Fahrdraht folgen,
- einem Ortungssystem (3) für die Modellfahrzeuge (1),
- einem Steuergerät (5) und
- einem drahtlosen Kommunikationssystem (7) zur Übermittlung von Informationen an das Fahrzeug und/oder von dem Fahrzeug,
**dadurch gekennzeichnet, dass** das Ortungssystem (3) wenigstens einen Signalsender (30) und eine Mehrzahl von Signalempfängern (3.1, 3.2, 3.3) aufweist, wobei der Signalsender (3.0) dem Modellfahrzeug (1) zugeordnet ist und eine Position des Fahrzeuges durch Auswertung von Laufzeitdifferenzen eines von dem Signalsender ausgesendeten Signals an den Signalempfängern (3.1, 3.2, 3.3) erfolgt.

2. System nach einem der vorhergehenden Ansprüche,
**dadurch gekennzeichnet, dass** das Ortungssystem (3) ultraschallbasiert ist.

3. System nach einem der vorhergehenden Ansprüche,
**dadurch gekennzeichnet, dass** das Kommunikationssystem (7) funkbasiert ist.

4. System nach einem der vorhergehenden Ansprüche,
**dadurch gekennzeichnet, dass** das Kommunikationssystem (7) wenigstens eine ortsfeste Komponente (7.1) und wenigstens eine mobile Komponente (7.2) aufweist, wobei die ortsfeste Komponente (7.1) mit dem Steuergerät (5) verbunden und die mobile Komponente (7.2) dem Modellfahrzeug (1) zugeordnet ist.

5. System nach einem der vorhergehenden Ansprüche,
**dadurch gekennzeichnet, dass** das Steuergerät (5), mit dem Ortungssystem (3) verbunden ist und geeignet ausgebildet ist, Informationen über ein Fahrbahnnetz und Informationen aus dem Ortungssystem (3) miteinander zu verknüpfen und das Modellfahrzeug (1) basierend auf diesen Informationen über das Kommunikationssystem (7) anzusteuern.

6. System nach Anspruch 5,
**dadurch gekennzeichnet, dass** das Steuergerät (5) geeignet ausgebildet ist, die Steuerung des Modellfahrzeuges (1) basierend auf Informationen über andere Modellfahrzeuge (1) durchzuführen.

7. System nach Anspruch 6,
**dadurch gekennzeichne**t, dass das Steuergerät (5) geeignet ausgebildet ist, eine Vielzahl von Modellfahrzeugen (1) anzusteuern.

8. System nach einem der Ansprüche 5-7,
**dadurch gekennzeichnet, dass** das Steuergerät (5) geeignet ausgebildet ist, dem Modellfahrzeug (1) standortbezogene Steuerbefehle zu übermitteln.

9. System nach einem der vorhergehenden Ansprüche,
**dadurch gekennzeichnet, dass** wenigstens das Ortungssystem (31) und das Kommunikationssystem (7) sowie das Steuergerät (5) mit einem Personalcomputer verbunden sind, wobei auf dem Personalcomputer eine speziell auf das System angepasste Software läuft.

10. Modellfahrzeug (1) für ein System nach einem der Ansprüche 1 bis 9, mit
- einem energieautarken Antrieb (11) und einer Lenkachse, die mit Hilfe eines Magneten, im gebrauch, einem unmittelbar unter einer Fahrbahn verlegten Fahrdraht folgen,
- einem Signalsender (12, 3.0)) und
- einer Steuereinrichtung (10) und
wenigstens einen Kommunikationsempfänger und einen Kommunikationssender die mit der Steuereinrichtung (10) verbunden sind.

11. Modellfahrzeug (1) nach Anspruch 10,
**dadurch gekennzeichnet, dass** die Steuereinrichtung (10) mit dem Signalsender (12, 3.0) verbunden ist.

12. Modellfahrzeug (1) nach einem der Ansprüche 10 bis 11,
**dadurch gekennzeichnet, dass** die Steuereinrichtung (10) geeignet ausgebildet ist, den Antrieb (11) in einer Mehrzahl von Geschwindigkeitsstufen nach Maßgabe von über den Kommunikationsempfänger empfangenen Informationen anzusteuern.

13. Modellfahrzeug (1) nach einem der Ansprüche 10 bis 12, **dadurch gekennzeichnet, dass** die Steuereinrichtung (10) geeignet ausgebildet ist, eine Mehrzahl von Licht- (13) und/oder Geräuscherzeugern (14) nach Maßgabe von über den Kommunikationsempfänger empfangenen Informationen anzusteuern.

14. Modellfahrzeug (1) nach einem der Ansprüche 10 bis 13, **dadurch gekennzeichnet, dass** die Steuereinrichtung (10) geeignet ausgebildet ist, Informationen über einen aktuellen Zustand des Modellfahrzeuges (1) an den Kommunikationssender zu übermitteln.

## Claims

1. System for operating model vehicles comprising
- at least one model vehicle (1) with energy self-sufficient drive (11) and a steering axle, which with the aid of a magnet, in use, follow a contact wire laid directly under a road,
- a positioning system (3) for the model vehicles (1),
- a control module (5) and
- a wireless communication system (7) for transmitting information to the
vehicle and/or from the vehicle,
**characterized in that** the positioning system (3) has at least one signal transmitter (30) and a plurality of signal receivers (3.1, 3.2, 3.3), wherein the signal transmitter (3.0) is assigned to the model vehicle (1) and a position of the vehicle is calculated by evaluating time differences of a signal emitted from the signal transmitter to the signal receivers (3.1, 3.2, 3.3).

2. System according to any one of the above claims, **characterized in that** the positioning system (3) is based on ultrasonics.

3. System according to any one of the above claims, **characterized in that** the communication system (7) is based on radio.

4. System according to any one of the above claims, **characterized in that** the communication system (7) has at least one stationary component (7.1) and at least one mobile component (7.2), wherein the stationary component (7.1) is connected to the control module (5) and the mobile component (7.2) is assigned to the model vehicle (1).

5. System according to any one of the above claims, **characterized in that** the control module (5) is connected to the positioning system (3) and is suitably designed to link information about a road network with information from the positioning system (3) with each other and to activate the model vehicle (1) based on this information via the communication system (7).

6. System according to claim 5, **characterized in that** the control module (5) is suitably designed to implement the control of the model vehicle (1) based on information about other model vehicles (1).

7. System according to claim 6, **characterized in that** the control module (5) is suitably designed to activate a plurality of model vehicles (1).

8. System according to any one of claims 5 - 7, **characterized in that** the control module (5) is suitably designed to transmit control commands related to location to the model vehicle (1).

9. System according to any one of the above claims, **characterized in that** at least the positioning system (31) and the communication system (7) as well as the control module (5) are connected to a personal computer, wherein software specifically adapted to the system runs on the personal computer.

10. Model vehicle (1) for a system according to any one of claims 1 - 9, comprising
- an energy self-sufficient drive (11) and a steering axle, which with the aid of a magnet, in use, follow a contact wire laid directly under a road,
- a signal transmitter (12, 3.0) and
- a control unit (10) and
- at least one communication receiver and one communication transmitter which are connected to the control unit (10)

11. Model vehicle (1) according to claim 10, **characterized in that** the control unit (10) is connected to the signal transmitter (12, 3.0).

12. Model vehicle (1) according to either of claims 10 or 11, **characterized in that** the control unit (10) is suitably designed to activate the drive (11) in a plurality of speed levels according to information received via the communication receiver.

13. Model vehicle (1) according to any one of claims 10 - 12, **characterized in that** the control unit (10) is suitably designed to activate a plurality of light generators (13) and/or sound generators (14) according to information received via the communication receiver.

14. Model vehicle (1) according to any one of claims 10 - 13, **characterized in that** the control unit (10) is suitably designed to transmit information about a current status of the model vehicle (1) to the communication transmitter.

## Revendications

1. Système de gestion de véhicules modèles comprenant :
au moins un véhicule modèle (1) comprenant un organe d'entraînement autosuffisant en énergie (11) et un arbre de direction qui peut suivre à l'aide d'un aimant, en cours d'utilisation, un fil de contact situé directement au-dessous d'une voie de circulation,
un système de localisation (3) du véhicule modèle (1),
un appareil de commande (5), et
un système de communication sans fil (7) pour permettre la transmission d'information au véhicule et/ou provenant du véhicule,
**caractérisé en ce que**
le système de localisation (3) comprend au moins un émetteur de signal (30) et une série de récepteurs de signal (3.1, 3.2, 3.3, l'émetteur de signal (3.0) étant associé au véhicule modèle (1) et la position de ce véhicule étant déterminée en évaluant les différences de durée de parcours d'un signal émis par l'émetteur de signal vers les récepteurs de signal (3.1, 3.2, 3.3).

2. Système conforme à la revendication précédente,
**caractérisé en ce que**
le système de localisation (3) est un système à ultrasons.

3. Système conforme à l'une des revendications précédentes, **caractérisé en ce que**
le système de communication (7) est un système radio.

4. Système conforme à l'une des revendications précédentes, **caractérisé en ce que**
le système de communication (7) comprend au moins un composant stationnaire (7.1) et au moins un composant mobile (7.2), le composant stationnaire (7.1) étant relié à l'appareil de commande (5) et le composant mobile (7.2) étant associé au véhicule modèle (1).

5. Système conforme à l'une des revendications précédentes, **caractérisé en ce que**
l'appareil de commande (5) est relié au système de localisation (3) et réalisé de façon à pouvoir combiner des informations concernant un réseau de voies de circulation et des informations provenant du système de localisation (3), et commander le véhicule modèle (1) à partir de ces informations par l'intermédiaire du système de communication (7).

6. Système conforme à la revendication 5,
**caractérisé en ce que**
l'appareil de commande (5) est réalisé de façon à pouvoir mettre en oeuvre la commande du véhicule modèle (1) à partir d'informations concernant d'autres véhicules modèles (1).

7. Système conforme à la revendication 6,
**caractérisé en ce que**
l'appareil de commande (5) est réalisé pour pouvoir commander une série de véhicules modèles (1).

8. Système conforme à l'une des revendications 5 à 7,
**caractérisé en ce que**
l'appareil de commande (5) est réalisé pour pouvoir transmettre au véhicule modèle (1) des ordres de commande liés à sa position.

9. Système conforme à l'une des revendications précédentes, **caractérisé en ce qu'**
au moins le système de localisation (31) et le système de communication (7) ainsi que l'appareil de commande (5) sont reliés à un PC, un logiciel spécifique adapté au système étant exécuté sur le PC.

10. Véhicule modèle (1) pour un système conforme à l'une des revendications 1 à 9, comprenant :
un organe d'entraînement autosuffisant en énergie (11) et un arbre de direction qui peut suivre à l'aide d'un aimant, en cours d'utilisation un fil de contact situé directement au-dessous d'une voie de circulation,
un émetteur de signal (12, 3.0),
un dispositif de commande (10), et
au moins un récepteur de communication et un émetteur de communication qui sont reliés au dispositif de commande (10).

11. Véhicule modèle (1) conforme à la revendication (10),
**caractérisé en ce que**
le dispositif de commande (10) est relié à l'émetteur de signal (12, 3.0).

12. Véhicule modèle (1) conforme à l'une des revendications 10 à 11, **caractérisé en ce que**
le dispositif de commande (10) est réalisé de façon à pouvoir commander l'organe d'entraînement (11) dans une série de rapports de vitesse conformément à des informations reçues par le récepteur de communication.

13. Véhicule modèle (1) conforme à l'une des revendications 10 à 12, **caractérisé en ce que**
le dispositif de commande (10) est réalisé pour pouvoir commander une série d'émetteurs lumineux (13) ou acoustiques (14) conformément aux informations reçues par le récepteur de communication.

14. Véhicule modèle (1) conforme à l'une des revendications 10 à 13, **caractérisé en ce que**
le dispositif de commande (10) est réalisé de façon à pouvoir transmettre à l'émetteur de communication des informations concernant l'état actuel du véhicule modèle (1).
